(19) Europäisches Patentamt
European Patent Office
Office européen des brevets

(11) **EP 4 779 391 A1**

(12) **EUROPEAN PATENT APPLICATION**

(43) Date of publication:
**22.07.2026 Bulletin 2026/30**

(21) Application number: 25223370.5

(22) Date of filing: **15.12.2025**

(51) International Patent Classification (IPC):
***G02B 27/01*** (2006.01)　　***G02B 5/08*** (2006.01)
***G02B 27/00*** (2006.01)

(52) Cooperative Patent Classification (CPC):
**G02B 5/0808; G02B 27/0081;** G02B 2027/0123

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **15.01.2025 JP 2025005227**

(71) Applicant: **SHIMADZU CORPORATION Kyoto-shi, Kyoto 604-8511 (JP)**

(72) Inventor: **ARITA, Yoshiki Kyoto, 604-8511 (JP)**

(74) Representative: **Kilian Kilian & Partner mbB Zielstattstraße 23a 81379 München (DE)**

(54) **IMAGE DISPLAY DEVICE**

(57)　An image display device (1) comprising: an image generation unit (10) that emits a light flux forming a predetermined image as a parallel light flux; and a light guide (20) that propagates the parallel light flux internally, the light guide (20) having a light flux introduction unit (23) into which the parallel light flux emitted from the image generation unit is introduced, a propagation unit that propagates the introduced parallel light flux while totally reflecting it internally, and a light extraction unit that extracts a part of the parallel light flux propagated through the propagation unit by a beam splitter (22), wherein the beam splitter is one in which reflective portions (222) that reflect the parallel light flux are formed in a two-dimensional arrangement.

## FIG. 2

Light flux introduction unit side　　Combiner side

EP 4 779 391 A1

**Description**

[Technical Field]

The present invention relates to an image display device that displays an image generated by an image generation unit as a virtual image in front of a user's eyes.

[Background Art]

There are image display devices that display an image generated by an image generation unit as a virtual image in front of a user's eyes (e.g., Patent Literatures 1 to 4). One such image display device is a head-up display (HUD). By using a head-up display, for example, a virtual image of an image generated by an image generation unit can be superimposed on a real image of scenery or an object existing in front of the eyes of a pilot (user) of an automobile or aircraft, allowing the pilot to view them.

A head-up display includes an image generation unit, a light guide, and a combiner. The image generation unit generates an image to be displayed as a virtual image and emits a light flux forming the image as a parallel light flux. The parallel light flux emitted from the image generation unit enters from one end side of the light guide and propagates toward the other end side while repeatedly undergoing total reflection inside the light guide. The light guide is a plate-like member as a whole, and a light extraction region corresponding to the size of the virtual image is provided near the other end on one surface. A beam splitter is disposed in or inside the light extraction region of the light guide. A part of the light flux propagating while undergoing total reflection inside the light guide is extracted by the beam splitter and exits from the light extraction region. The light flux extracted from the light extraction region enters the combiner. The pilot can simultaneously view the real image of the scenery or object visible through the combiner and the virtual image formed at infinity by the parallel light flux projected onto the combiner (e.g., Non-Patent Literature 1).

As the light guide, for example, one is used in which multiple units are combined, each formed by forming a dielectric multilayer film or a metal thin film, which functions as a beam splitter, on a predetermined surface of a prism made of glass or resin. In this case, the light guide is configured by combining prisms such that the beam splitters are positioned at multiple locations inside the region of the light guide where the light extraction region is provided. In this light guide, a part of the light flux is reflected by the beam splitters inside the light guide and exits from the light extraction region.

Furthermore, a light guide is also used in which a dielectric multilayer film or a metal thin film, functioning as a beam splitter, is formed in a light extraction region provided on one surface of a plate-like member made of glass or resin. In this light guide, a part of the light flux incident on the light extraction region from inside the light guide is reflected, and a part of the light flux is caused to exit from the surface of the light extraction region. This light guide can be manufactured more easily than the aforementioned light guide that combines multiple prisms.

Here, consider an image display device equipped with a light guide (the latter light guide) in which a beam splitter is formed in the light extraction region, and a virtual image is formed by the light flux transmitted through the beam splitter. Let $\Phi in$ be the intensity of the incident light flux entering the light guide, T be the transmittance of the light flux at the beam splitter, $\delta$ be the loss, and n be the number of times the light flux, which has repeated total reflection over the entire length of the light guide, is incident on the beam splitter. The intensity $\Phi out\_n$ of the light flux that is incident on the beam splitter n times and exits from the light extraction region is expressed by the following equation (1).

$$\Phi out\_n = \Phi in \times T \times (1 - T - \delta)^{n-1} \ \ldots \ (1)$$

The ratio k of $\Phi out\_n$ to the intensity $\Phi out\_1$ of the light flux that first passes through the beam splitter and exits the light guide is expressed by the following equation (2).

$$k = \Phi out\_n / \Phi out\_1 = \Phi in \times T \times (1 - T - \delta)^{n-1} / (\Phi in \times T) = (1 - T - \delta)^{n-1} \ \ldots \ (2)$$

As can be understood from equation (2), the more times the light flux reaches the beam splitter, the lower the intensity of the light flux extracted from the light guide by the beam splitter. That is, the intensity of the light flux gradually decreases from the side near the one end, where the light flux emitted from the image generation unit enters, toward the other end side, which causes luminance unevenness in the virtual image formed thereby. This luminance unevenness becomes smaller as the transmittance T is made smaller.

Furthermore, the intensity of the light flux remaining inside the light guide even after reaching the beam splitter n times (light flux that becomes loss without being used for virtual image formation) is expressed by the following equation (3).

$$\Phi loss\_n = \Phi in \times (1 - T - \delta)^n \ ... \ (3)$$

The ratio $\eta$ of the total intensity of the output light flux to the intensity $\Phi in$ of the incident light flux, that is, the light use efficiency, is expressed by the following equation (4).

$$\eta = (\Phi out\_1 + \Phi out\_2 + ... + \Phi out\_n) / \Phi in = (\Phi in - \Phi loss\_n) / \Phi in = 1 - (1 - T - \delta)^n \ ...$$

$$(4)$$

As can be understood from equation (4), the larger the transmittance T, the higher the light use efficiency.

[Prior Art Documents]

[Patent Literatures]

[Patent Literature 1] JP 2010-282231 A
[Patent Literature 2] JP 2013-178549 A
[Patent Literature 3] JP 2013-210633 A
[Patent Literature 4] WO 2021/157044

[Non-Patent Literatures]

[Non-Patent Literature 1] "Realization of a large projection, compact automotive head-up display with light guide technology", [online], April 21, 2023, Shimadzu Corporation, [Searched January 15, 2025], Internet <URL: https://www.shimadzu.co.jp/messe/exhibition/mobility/sensing/display/01.html>
[Non-Patent Literature 2] "Polka Dot Beamsplitters", [online], Thorlabs, Inc., [Searched January 15, 2025], Internet <URL: https://www.thorlabs.co.jp/newarouppage9.cfm?objecteroup_id=1110>
[Non-Patent Literature 3] "Rectangular Step Variable Metallic ND Filters", [online], Thorlabs, Inc., [Searched January 15, 2025], Internet <URL: https://www.thorlabs.co.jp/newgrouppage9.cfm?objectgroup_id=1624>
[Non-Patent Literature 4] "Rectangular Continuously Variable Metallic ND Filters", [online], Thorlabs, Inc., [Searched January 15, 2025], Internet <URL: https://www.thorlabs.co.ip/NewGroupPage9.cfm?ObjcctGroup_ID=1623>
[Non-Patent Literature 5] "Development of technology to print and form metal electrodes on plastic film at low temperature", [online], September 24, 2008, National Institute of Advanced Industrial Science and Technology (AIST), [Searched January 15, 2025], Internet <URL: https:llwww.aist.go. ip/aist_j/press_release/pr2008/pr20080924 2/pr20080924 2.html>
[Non-Patent Literature 6] Fujimoto, Daiki, "Sea-Light processing for patterning vapor-deposited films by water washing, also for low-resistance ITO/Ag grid composite electrodes Oike & Co., Ltd.", Convertech, January 15, 2014, Vol. 42, No. 1, pp. 110-111

[Summary of Invention]

[Problem to be Solved by the Invention]

As can be understood from equation (2) and equation (4), luminance unevenness and light use efficiency are in a trade-off relationship. However, in conventional image display devices, it is difficult to change the transmittance (or reflectance) when forming the beam splitter composed of a dielectric multilayer film or the like during the manufacturing process of the light guide, posing a problem of a low degree of freedom in design.
Although a head-up display has been given as an example here to explain the problems of the conventional art, image display devices such as head-mounted displays that do not have a combiner also have the same problems as described above.
The problem to be solved by the present invention is to provide an image display device that displays an image generated by an image generation unit as an enlarged virtual image in front of a user's eyes, which can be manufactured simply while increasing the degree of freedom in design.

[Means for Solving the Problem]

An image display device according to the present invention, which has been made to solve the above problem, comprises: an image generation unit that emits a light flux forming a predetermined image as a parallel light flux; and a light guide that propagates the parallel light flux internally, the light guide having a light flux introduction unit provided on one end side of the light guide to introduce the parallel light flux emitted from the image generation unit, a propagation unit that propagates the introduced parallel light flux while reflecting it internally, and a light extraction unit provided on the other end side of the light guide to extract a part of the light flux propagated through the propagation unit by a beam splitter, wherein the beam splitter is one in which reflective portions that reflect the parallel light flux are arranged two-dimensionally.

[Effects of the Invention]

In the light guide included in the image display device according to the present invention, the beam splitter may be provided on the surface of the light extraction unit of the light guide, or may be provided inside the light extraction unit of the light guide.
In the image display device according to the present invention, a part of the parallel light flux is extracted from the light extraction unit using the beam splitter in which the reflective portions that reflect the parallel light flux are arranged two-dimensionally. This is a component corresponding to an optical element called, for example, a polka-dot beam splitter (e.g., Non-Patent Literature 2) or a polka-dot mirror, and the transmittance or reflectance of the light flux can be freely changed by changing the number or size of the reflective portions. Moreover, this beam splitter can be manufactured simply by, for example, partially forming the reflective portions by vapor deposition of metal or the like while masking the portions corresponding to the light transmissive portions, or by forming openings in a metal thin film functioning as the reflective portions by performing laser processing. Thus, the image display device according to the present invention can be manufactured simply while increasing the degree of freedom in design.

[Brief Description of Drawings]

FIG. 1 is a schematic configuration diagram of a main part of a head-up display which is an embodiment of the image display device according to the present invention.
FIG. 2 is an example of a polka-dot beam splitter used in this embodiment.
FIG. 3 is another example of a polka-dot beam splitter used in this embodiment.
FIG. 4 is a graph illustrating the relationship between the position in the light extraction region and the reflectance of the beam splitter in the image display device of this embodiment and an image display device of a reference example.
FIG. 5 is a graph illustrating the relationship between the position in the light extraction region and the intensity of the exiting light flux in the image display device of this embodiment and an image display device of a reference example.
FIG. 6 is a graph illustrating the normalized relationship between the position in the light extraction region and the intensity of the exiting light flux in the image display device of this embodiment and an image display device of a reference example.
FIG. 7 is a configuration example of an image display device that does not use a combiner.
FIG. 8 is a configuration example of an image display device that uses a light guide having a light extraction auxiliary member.
FIG. 9 is a configuration example of an image display device that uses a prism-type light guide.

[Description of Embodiments]

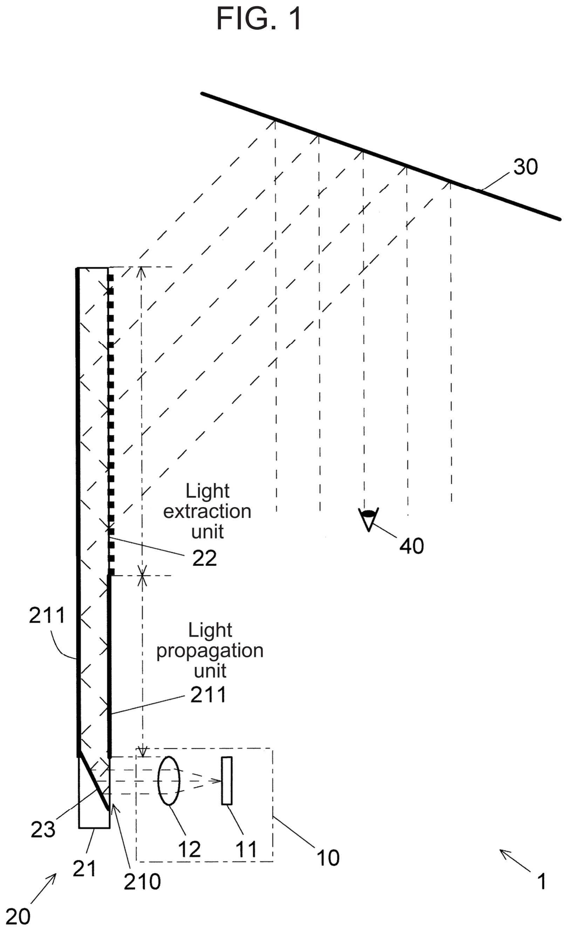

A head-up display, which is an embodiment of the image display device according to the present invention, will be described below with reference to the drawings. Note that in FIG. 1 and FIG. 7 to FIG. 9, only a part of the path of the light flux forming the image is shown by a broken line to clearly show the path of the light flux.
FIG. 1 is a schematic configuration diagram of a main part of a head-up display 1 of this embodiment. The head-up display 1 includes an image generation unit 10, a light guide 20, and a combiner 30.
The image generation unit 10 includes an image formation unit 11 and a collimating optical system 12. The image formation unit 11 includes, for example, a light source unit and a display element. The display element is, for example, a transmissive liquid crystal display element, and in that case, the light source unit is, for example, a backlight light source that illuminates the transmissive liquid crystal display element from behind.
The configuration of the image formation unit 11 is not limited to this. For example, as the display element, a reflective liquid crystal display element, an organic EL display, a micro-LED display, a DMD (Digital Micromirror Device), a MEMS mirror, a projector, or the like can also be used. When using a reflective liquid crystal display element or a DMD as the display element, one that illuminates the liquid crystal display element or the DMD from the front side, for example, can be used as the light source unit. When using a self-emissive display element such as an organic EL display or a micro-LED display as the display element, the display element may incorporate a light source unit. When a MEMS mirror whose angle is scanned is used as the display element, a laser light source that irradiates a narrow laser beam toward the MEMS mirror, for example, can be used as the light source unit.

The collimating optical system 12 converts the light flux, which exits so as to spread from each point (pixel) on the display surface of the display element included in the image formation unit 11, into a parallel light flux.

The light guide 20 is configured using a plate-like member 21 made of glass, resin, or the like that is transparent to the light flux, as a base material. A light flux introduction unit 23 is provided on one end side of the light guide 20. The light flux introduction unit 23 is, for example, a mirror (reflecting plate) provided inside the plate-like member 21. Furthermore, the light guide 20 is provided with a light propagation unit and a light extraction unit in order from the side near the light flux introduction unit 23. Note that although the base material of the light guide 20 is the plate-like member 21 in this embodiment, a base material of another shape may be used.

In the light propagation unit, reflective portions that reflect the light flux are provided on both surfaces of the plate-like member 21. These reflective portions are configured, for example, by a reflective coating 211. On the other hand, in the light extraction unit, a partial reflective portion is provided in a light extraction region on one surface of the plate-like member 21, and a reflective portion is provided on the other surface. The partial reflective portion reflects a part of the light flux and transmits a part, and is configured by a polka-dot beam splitter (also called a polka-dot mirror) 22. The light flux converted into parallel light by the collimating optical system 12 is introduced into the inside of the plate-like member 21 by the light flux introduction unit 23. In this embodiment, the light flux is caused to enter the inside of the plate-like member 21 at an incident angle smaller than the incident angle at which total reflection occurs inside the plate-like member 21, and is repeatedly reflected by the reflective coating 211 to propagate inside the plate-like member 21. In FIG. 1, the light extraction region (the region where the light flux exits in the light extraction unit) is provided on the surface on the side where the image formation unit 11 is located, but the light extraction region may be provided on the opposite surface.

When the light flux propagating from the one end side to the other end side inside the plate-like member 21 is incident on the region where the polka-dot beam splitter 22 is provided (light extraction region), a part thereof is transmitted through the polka-dot beam splitter 22 and exits to the outside of the light guide 20.

The combiner 30 is a member on which the light flux exiting the light guide 20 is incident, and is made of a material that partially transmits visible light at a constant rate regardless of position. The combiner 30 is arranged in front of the user's eyes (in front of the user's eyes 40). The light flux reflected by the combiner 30 enters the user's eyes 40, thereby causing the user to view the virtual image of the image formed by the image formation unit 11, together with the real image of the object or scenery located in front of the user's eyes. Since the parallel light flux forming the image formed by the image formation unit 11 is incident on the combiner 30 over a wide range from the light guide 20, the virtual image of the image formed by the image formation unit 11, which is formed at an infinite position in front of the user's eyes, can be viewed over a wide range (the eye box can be expanded). Note that although the combiner 30 is a member configuring a part of the head-up display 1, for example, when using the head-up display 1 of this embodiment in an automobile or aircraft, its windshield may be used as the combiner 30.

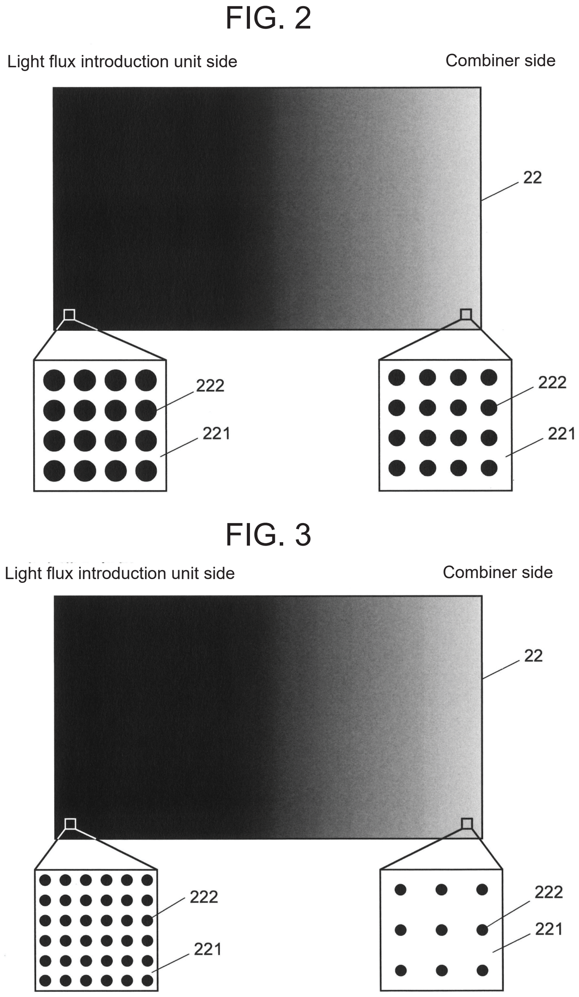

One of the features of the head-up display 1 of this embodiment is that a part of the light flux is extracted from the light guide 20 by the polka-dot beam splitter 22. The polka-dot beam splitter 22 is, for example, as schematically shown in FIG. 2, one in which a plurality of reflective portions 222 (e.g., thin films of metal, aluminum, etc.) that reflect the light flux are formed on a sheet-like base material 221 (e.g., a glass substrate) that transmits the light flux, by vapor deposition or the like in a two-dimensional arrangement (e.g., a grid-like, honeycomb-like, or other arrangement). The reflective portion 222 is, for example, circular with a diameter of several tens of $\mu$m. However, the shape and size of the reflective portion 222 are not limited to this, and may be, for example, rectangular of several hundred $\mu$m square or the like. In the polka-dot beam splitter 22, the transmittance/reflectance can be easily changed by changing the ratio of the reflective portions 222 occupying the surface of the base material 221. This ratio can be adjusted by at least one of the size of the reflective portions 222 or the number of reflective portions 222 per unit area. Furthermore, in this embodiment, the reflective portions 222 are formed on the sheet-like base material 221 that transmits the light flux, but a polka-dot beam splitter may be used in which a plurality of holes are formed by laser processing or the like in a sheet-like base material (e.g., a thin film of metal such as silver or aluminum) that reflects the light flux. Alternatively, without using the sheet-like base material 221, the reflective portions 222 may be formed directly on the surface of the plate-like member 21 by vapor deposition or the like.

The light flux that has passed through the polka-dot beam splitter 22 exits from the light guide 20 and forms a virtual image. At this time, if the light flux that has exited the light guide 20 does not enter the user's eyes 40, the user cannot view the virtual image. For example, if the regions where the reflective portions 222 are not provided or the holes (that is, the portions where the light flux is transmitted) are separated by more than the size of the user's pupil, the light flux may not enter depending on the position of the user's eyes 40, and the user may not be able to view the virtual image. Therefore, in order that the user can view the virtual image regardless of the position of the user's eyes 40, the separation distance between the portions where the light flux is transmitted is preferably made shorter than the size of the pupil. Normally, the size of an adult's pupil is about 3 mm, so the separation distance between the portions where the light flux is transmitted should be less than 3 mm. If users include infants or others with smaller pupils than adults, the separation distance between the portions where the light flux is transmitted may be appropriately changed considering their pupil sizes.

FIG. 2 and FIG. 3 schematically show examples of the polka-dot beam splitter 22 used in this embodiment. FIG. 2 shows the polka-dot beam splitter 22 in which the reflective portions 222 gradually become smaller from the light flux introduction unit 23 side toward the combiner 30 side. FIG. 3 shows the polka-dot beam splitter 22 in which the spacing between the reflective portions 222 gradually becomes wider from the light flux introduction unit 23 side toward the combiner 30 side. In either polka-dot beam splitter 22, the aperture ratio (the ratio of the portions where the light flux is transmitted) is configured to gradually increase from the light flux introduction unit 23 side toward the combiner 30 side, and thereby, the transmittance also gradually increases.

In the conventional light guide, since the transmittance (or reflectance) of the light flux at the beam splitter is constant regardless of the incident position, the intensity of the light flux exiting from the light guide decreases from the one end side toward the other end side within the light extraction region, and as a result, luminance unevenness occurs in the virtual image viewed by the user.

In contrast, in this embodiment, by increasing the transmittance of the polka-dot beam splitter 22 from the one end side (light flux introduction unit side) toward the other end side (combiner side), intensity unevenness in the virtual image viewed by the user can be suppressed, or the light use efficiency can be increased.

As previously explained using equations (1) to (4), luminance unevenness and light use efficiency are in a trade-off relationship.

As a method for improving the light use efficiency while improving the luminance unevenness of the virtual image in an image display device equipped with a light guide, changing the transmittance (or reflectance) for each position where a part of the light flux is extracted by the beam splitter, as described above, is conceivable. When using a beam splitter made of a dielectric multilayer film or a metal thin film as in the conventional case, in order to change its transmittance (or reflectance), it is conceivable to apply, for example, the technology used in step variable ND filters (Non-Patent Literature 3) or continuous variable metal ND filters (Non-Patent Literature 4). However, manufacturing a light guide using these technologies requires performing vapor deposition processing while shifting the position of a metal mask stepwise or continuously within the light extraction region. For example, if one attempts to form five regions with different transmittances within the light extraction region, it is necessary to move the metal mask stepwise four times and perform processing such as vapor deposition of a metal thin film each time, which is time-consuming to manufacture.

In contrast, in this embodiment, the polka-dot beam splitter 22 can be simply formed in a single process by, for example, vapor depositing metal or the like while masking the regions excluding the reflective portions 222 on the surface of the base material 221 (or the plate-like member 21). In addition, the polka-dot beam splitter 22 can also be simply formed by printing the pattern of the reflective portions 222 by screen printing (e.g., Non-Patent Literature 5), or by printing the pattern of the reflective portions 222 by a combination of gravure printing and lift-off (e.g., Non-Patent Literature 6).

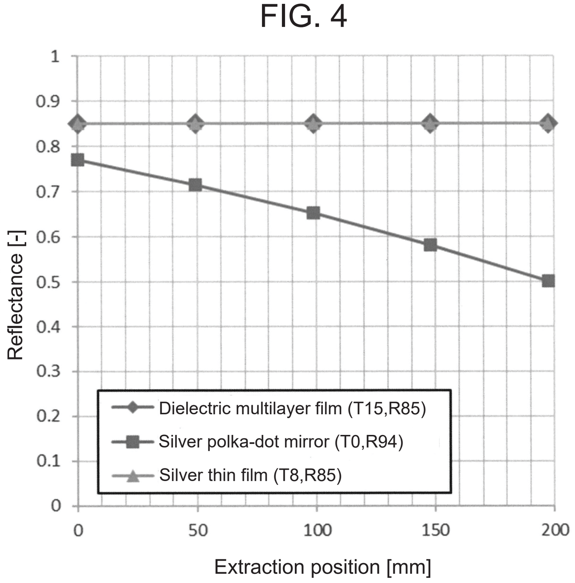

Here, the results of simulating the intensity of the light flux for each extraction position will be described with reference to FIG. 4 to FIG. 6. In the head-up display 1 of the example, as shown in FIG. 4, a polka-dot beam splitter 22 (one in which holes are formed in a sheet-like base material made of silver) configured such that the reflectance becomes lower (in other words, the transmittance becomes higher) as the extraction position becomes farther from the light flux introduction unit 23 was used. On the other hand, in the image display device of the reference example, a beam splitter made of a dielectric multilayer film or a silver thin film and having a constant reflectance (0.85) regardless of the extraction position was used. T shown in FIG. 4 to FIG. 6 indicates transmittance, and R indicates reflectance. When the sum of T and R is not 100, the remaining part becomes loss. Note that the transmittance 0% and reflectance 94% of the silver polka-dot mirror used in the example are the transmittance and reflectance of the silver coating part constituting the base material 221. In all of FIG. 4 to FIG. 6, the position where the extraction position is 0 mm is the end of the light extraction region on the light flux introduction unit 23 side, and the position where the extraction position is 200 mm is the end on the opposite side.

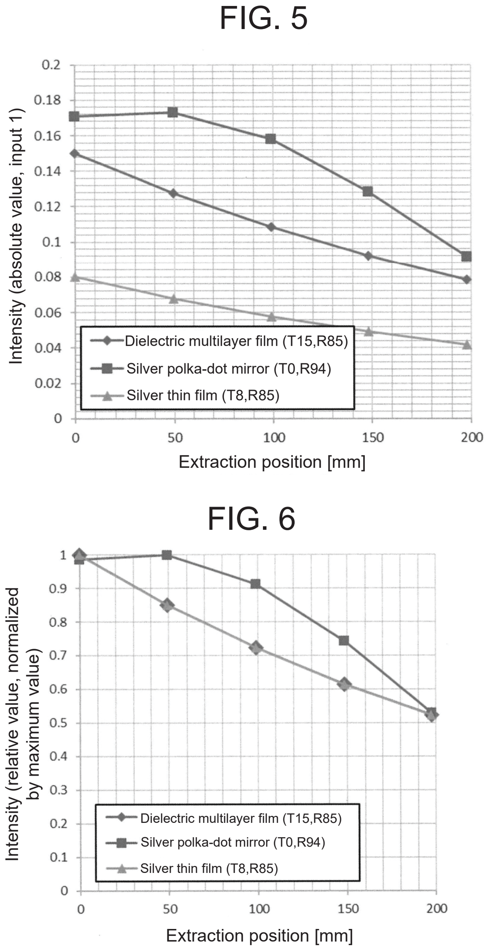

Furthermore, in FIG. 4 to FIG. 6, the reflectance of the polka-dot beam splitter 22 in the head-up display 1 of the example was determined such that the ratio of the light flux intensity at the extraction position 200 mm to the maximum light flux intensity (the intensity at the extraction position 50 mm in the example, and the intensity at the extraction position 0 mm in the two reference examples) at each light extraction position from the light guide becomes the same in the head-up display 1 of the example and the image display devices of the two reference examples (see FIG. 6). Note that in FIG. 4 and FIG. 6, the data points of the two reference examples (dielectric thin film and silver thin film) overlap, although it is difficult to distinguish.

FIG. 5 is a graph showing the relationship between the extraction position and the light flux intensity in the above three types of image display devices. Furthermore, FIG. 6 is obtained by normalizing the graph of FIG. 5, setting the maximum intensity value in each example (the intensity at the extraction position 50 mm in the example, and the intensity at the extraction position 0 mm in the two reference examples) as 1. As can be understood from FIG. 5 and FIG. 6, in the image display device of the example, the light flux intensity in the central part of the light extraction region (positions at extraction positions 50 mm, 100 mm, 150 mm) is higher than that in the image display devices of the reference examples. That is, in the image display device of the example, the light use efficiency is higher than that of the image display devices of the reference examples by the difference in intensity in this region. Specifically, whereas the light use efficiency was 56% when using a beam splitter made of a dielectric multilayer film with substantially 0 loss (higher light use efficiency than a metal thin film where loss occurs), in the image display device of the example, the light use efficiency was 72%, a significant improvement.

The above embodiment and example are merely examples of design, and in the head-up display 1 of this embodiment, the design can be appropriately changed according to the characteristics of the image to be viewed by the user.

For example, when displaying a virtual image in front of the eyes of a pilot of an automobile or aircraft, important image information is often displayed in the center, and priority may be given to increasing the intensity of the light flux forming the image located in the center of the virtual image rather than the peripheral portions, even if some luminance unevenness occurs. Also in this case, it is effective to change the transmittance (or reflectance) for each position where a part of the light flux is extracted by the beam splitter. However, for the same reasons as described above, if one attempts to form a beam splitter with a dielectric thin film or a metal thin film as in the conventional case, it is time-consuming to manufacture. In contrast, in the head-up display 1 of this embodiment, by using the various manufacturing methods described above, the polka-dot beam splitter 22 designed with arbitrary transmittance or reflectance can be simply formed to manufacture the light guide 20.

The above embodiment is an example, and can be appropriately modified within the spirit of the present invention.

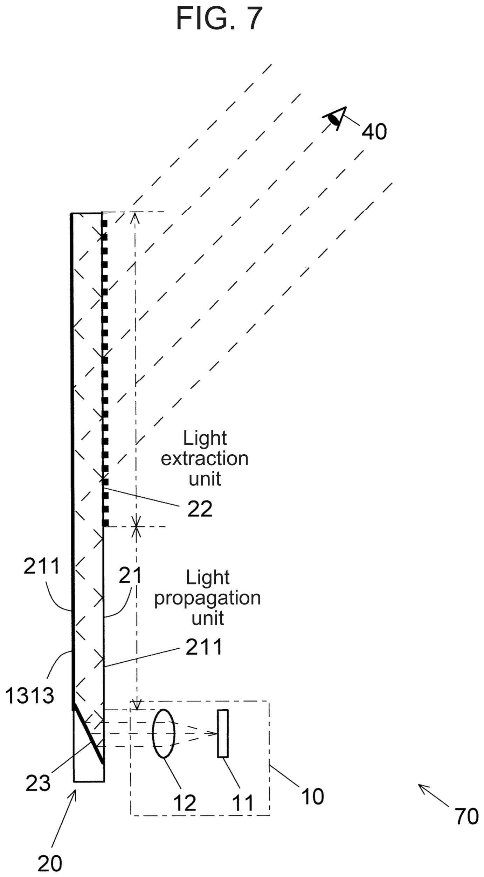

In the above embodiment, the head-up display 1 was configured to allow the user to view both the enlarged virtual image formed by the image formation unit 11 and the real image in front of the user's eyes, using the combiner 30. However, as shown in FIG. 7, it may be a head-mounted display 70 (that is, an image display device without a combiner) that allows the user to view the virtual image and the real image via the light extraction unit of the light guide 20. However, as explained in the above embodiment, since the transmittance (or reflectance) of the polka-dot beam splitter 22 differs depending on the position in the light extraction region, the transmittance affects the luminance of the real image viewed by the user, causing some luminance unevenness in the real image viewed by the user. Therefore, when allowing the user to view both the virtual image and the real image, it is preferable to use the combiner 30 as in the above embodiment. Note that when allowing the user to view only the virtual image, the above configuration without using the combiner 30 can be suitably used.

In the above embodiment, the light flux was introduced into the inside of the plate-like member 21 from the light flux introduction unit 23 at an angle at which the light flux does not undergo total reflection inside the plate-like member 21, and the light flux was propagated by providing the reflective coating 211. However, the light flux may be introduced into the inside of the plate-like member 21 from the light flux introduction unit at an angle at which the light flux undergoes total reflection inside the plate-like member 21.

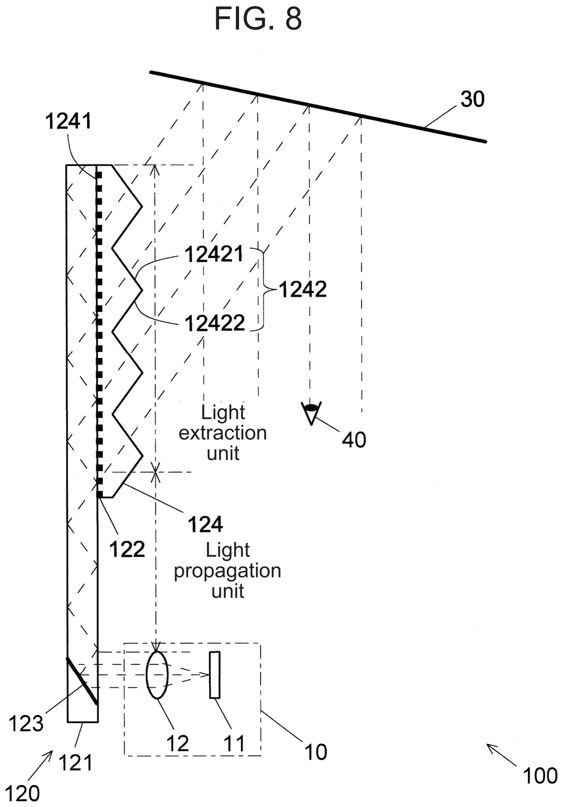

FIG. 8 shows a modified form thereof. A head-up display 100 of the modified form includes an image generation unit 10, a light guide 120, and a combiner 30. Since the image generation unit 10 and the combiner 30 are the same as those in the head-up display 1 of the above embodiment, their description is omitted.

The light guide 120 includes a plate-like member 121, a polka-dot beam splitter 122 arranged so as to be in contact with a light propagation region provided on one surface of the plate-like member 121, and a light extraction auxiliary member 124. A light flux introduction unit 123 is provided on one end side of the light guide 20. The light flux introduction unit 23 is, for example, a mirror (reflecting plate) provided inside the plate-like member 121. The polka-dot beam splitter 122 is, similarly to the above embodiment, one in which reflective portions that reflect the light flux are formed by vapor deposition or the like on a sheet-like base material that transmits the light flux. Note that for the material constituting the base material of the polka-dot beam splitter 122, one having a refractive index such that total reflection does not occur (the total reflection condition is not met) when the light flux propagating inside the plate-like member 121 is incident on the boundary surface between the plate-like member 121 and the base material is selected.

The light extraction auxiliary member 124 is a member having a flat surface 1241 in contact with the polka-dot beam splitter 122 and a sawtooth surface 1242, and is made of glass, resin, or the like that is transparent to the light flux, similarly to the plate-like member 121. The material constituting the light extraction auxiliary member 124 may be the same as or different from the material constituting the plate-like member 121. On the sawtooth surface 1242, first surfaces 12421, which are substantially orthogonal to the traveling direction of the light flux transmitted through the polka-dot beam splitter 122, and second surfaces 12422, which are substantially parallel thereto, are alternately formed.

In the head-up display 100 of the modified form, the light flux introduction unit 123 introduces the light flux incident from the image generation unit 10 into the inside of the plate-like member 121 at an angle such that it undergoes total reflection inside the plate-like member 121 (undergoes total reflection at the boundary surface between the glass, resin, or the like constituting the plate-like member 121 and air).

The light flux that has propagated while undergoing total reflection inside the plate-like member 121, upon reaching the position of the polka-dot beam splitter 122, a part of the light flux is reflected by the reflective portions of the polka-dot beam splitter 122, and the remaining light flux is transmitted through the base material portion of the polka-dot beam splitter 122 and enters the light extraction auxiliary member 124 (at the light transmissive portions of the polka-dot mirror, the plate-like member 121 and the base material are in contact, and the total reflection condition is different from that at the boundary surface with air, so a part of the light flux exits to the outside).

The light flux that has been transmitted through the polka-dot beam splitter 122 and entered the light extraction auxiliary member 124 exits to the outside through the first surfaces 12421. By using the light extraction auxiliary member 124 provided with the sawtooth surface 1242 having the first surfaces 12421, which are substantially perpendicular to the traveling direction of the light flux exiting the light guide 120, and the second surfaces 12422, which are substantially parallel thereto, it is possible to prevent light entering from outside the light guide 120 from entering the combiner 30 and becoming stray light, degrading the visibility of the image. Note that in the modified form, for example, as described in Patent Literature 4, a black paint, which is a light absorbing material that absorbs visible light, may be applied to the second surfaces. Here, although the configuration prevents stray light by using the light extraction auxiliary member 124 provided with the sawtooth surface 1242 having the first surfaces 12421 and the second surfaces 12422 as described above, this is a preferred embodiment and is not essential. The light extraction auxiliary member only needs to have at least a surface that allows the light flux exiting from the light guide 120 to exit (does not totally reflect). For example, a light extraction auxiliary member provided with the flat surface 1241 and a light extraction surface having an inclination at an angle that does not totally reflect the light flux exiting from the light guide (a light extraction surface that causes the parallel light flux to be incident at an incident angle smaller than the total reflection angle) may be used.

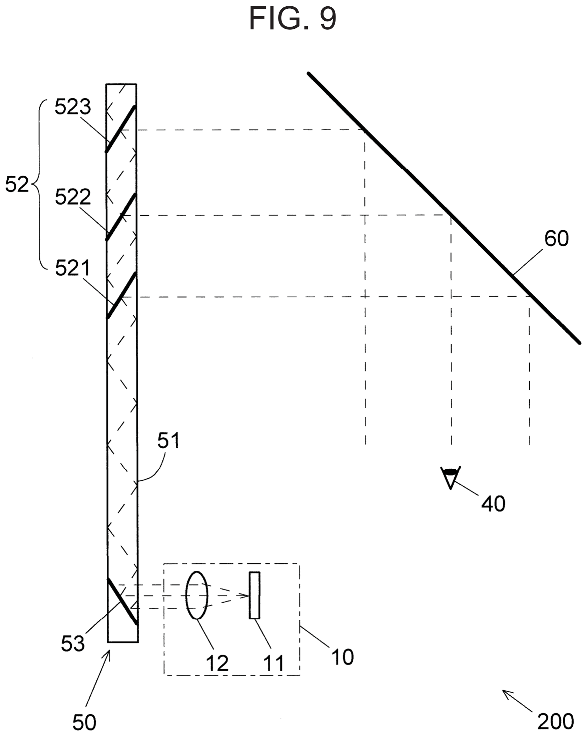

Furthermore, in the above embodiment, the light guide 20 in which the polka-dot beam splitter 22 is arranged on one surface of the plate-like member 21 was used, but a prism-type light guide may be used. In this case, for example, as shown in FIG. 9 as another modified form of a head-up display 200, a polka-dot beam splitter 52 is formed on a predetermined surface of a plurality of prisms constituting a plate-like member 51, and the parallel light flux emitted from the image generation unit 10 is introduced into the inside of a light guide 50 by a light flux introduction unit 53. The light flux introduction unit 53 introduces the parallel light flux into the light guide 50 at an angle that satisfies the total reflection condition. Inside the light guide, by reflecting a part of the propagated parallel light flux by the polka-dot beam splitter 52, the light flux is caused to exit from the light extraction region to the outside. Furthermore, by causing the exiting light flux to enter the combiner 30, the user can be made to view the real image in front of the eyes and the enlarged virtual image of the image formed by the image formation unit 11. In this case, for example, the ratio of holes in the polka-dot beam splitter 52 (the number and/or size of holes in the polka-dot beam splitters 521, 522, 523) may be changed according to the distance from the light flux introduction unit 53. Although the combiner 30 is used in this head-up display 200, as described above, a configuration may be adopted in which the combiner 30 is not used, and the light flux exiting from the light guide 50 is caused to enter the user's eyes 40.

However, when the prism-type light guide 50 is used, the light flux that has passed through the polka-dot beam splitter 52 inside the light guide 50 can also exit from the light extraction region to the outside. If such light enters the user's eyes 40, a ghost image will be formed. Considering this point, it is preferable to configure the head-up display 1 using the light guide 20 in which the polka-dot beam splitter 22 is formed on the surface of the plate-like member 21, as in the above embodiment.

[Aspects] It will be apparent to those skilled in the art that the exemplary embodiments described above are specific examples of the following aspects.

(Item 1) An image display device according to one aspect of the present invention comprises: an image generation unit that emits a light flux forming a predetermined image as a parallel light flux; and a light guide that propagates the parallel light flux internally, the light guide having a light flux introduction unit formed on one end side of the light guide, into which the parallel light flux emitted from the image generation unit is introduced, a propagation unit that propagates the introduced parallel light flux while reflecting it internally, and a light extraction unit provided on the other end side of the light guide to extract a part of the light flux propagated through the propagation unit by a beam splitter, wherein the beam splitter is one in which reflective portions that reflect the parallel light flux are formed in a two-dimensional arrangement.

In the light guide included in the image display device according to Item 1, the beam splitter may be provided on the surface of the light extraction unit of the light guide, or may be provided inside the light extraction unit of the light guide.

In the image display device according to Item 1, a part of the parallel light flux is extracted from the light extraction unit using the beam splitter in which the reflective portions that reflect the parallel light flux are arranged two-dimensionally. This is a component corresponding to an optical element called, for example, a polka-dot beam splitter or a polka-dot mirror, and the transmittance or reflectance of the light flux can be freely changed by changing the number or size of the reflective portions. Moreover, this beam splitter can be manufactured simply by, for example, partially forming the reflective portions by vapor deposition of metal or the like while masking the portions corresponding to the light transmissive portions, or by forming openings by laser processing in a metal thin film functioning as the reflective portions. Thus, the image display device according to Item 1 can be manufactured simply while increasing the degree of freedom in design.

(Item 2) The image display device according to Item 2 is the image display device according to Item 1, wherein the light flux introduction unit introduces the parallel light flux into the light guide at an angle at which the parallel light flux does not undergo total reflection in the propagation unit, and a reflective portion is provided in a region on the surface of the light guide, on which the parallel light flux propagating through the propagation unit is incident.

(Item 3) The image display device according to Item 3 is the image display device according to Item 1, wherein the light flux introduction unit introduces the parallel light flux into the light guide at an angle at which the parallel light flux undergoes total reflection in the propagation unit, and the light guide further comprises: a light extraction auxiliary member arranged so as to be in contact with the beam splitter and having, in a region where the parallel light flux transmitted through the beam splitter exits, a light extraction surface on which the parallel light flux is incident at an angle at which it does not undergo total reflection.

The image display device according to Item 1 can adopt a configuration as described in Item 2, in which a reflective portion is provided on the surface of the light guide to repeatedly reflect the parallel light flux and propagate it through the propagation unit. Alternatively, it can also adopt a configuration as described in Item 3, in which the parallel light flux is introduced into the light guide by the light flux introduction unit at an angle that satisfies the total reflection condition, and is propagated through the propagation unit by repeating total reflection, without reducing the light amount.

(Item 4) The image display device according to Item 4 is the image display device according to any one of Items 1 to 3, wherein a separation distance between the plurality of light transmissive portions is less than a size of a user's pupil.

If the light flux that has exited the light guide does not enter the user's eyes, the user cannot view the virtual image. For example, if the separation distance between the light transmissive portions is longer than the size of the user's pupil, the light flux may not enter depending on the position of the user's eyes, and the user may not be able to view the virtual image. In the image display device according to Item 4, since the separation distance between the light transmissive portions is less than the size of the pupil, the user can be made to reliably view the virtual image regardless of the position of the user's pupil. Note that normally, the size of an adult's pupil is about 3 mm, so the separation distance between the light transmissive portions should be less than 3 mm. If infants may be included among users, the separation distance between the light transmissive portions may be appropriately designed considering their pupil sizes.

(Item 5) The image display device according to Item 5 is the image display device according to any one of Items 1 to 4, wherein the beam splitter is provided on the surface of the light guide.

The light guide can be configured by arranging the beam splitter on the surface of the light guide and causing the parallel light flux transmitted through the beam splitter to exit the light guide, or can also be configured by arranging the beam splitter on a predetermined surface of a plurality of prisms constituting the light guide and causing the light flux reflected by the beam splitter to exit the light guide. However, in the latter case, light that has passed through the beam splitter at an unintended angle may exit from the light extraction region and form a ghost image. In the image display device according to Item 5, since the former light guide is used, the generation of ghost images can be prevented.

(Item 6) The image display device according to Item 6 is the image display device according to any one of Items 1 to 5, wherein a ratio of the reflective portions in the beam splitter varies depending on position.

(Item 7) The image display device according to Item 7 is the image display device according to Item 6, wherein the ratio of the reflective portions changes stepwise in a direction away from the light flux introduction unit.

(Item 8) The image display device according to Item 8 is the image display device according to Item 6, wherein the ratio of the reflective portions changes continuously in either an increasing or decreasing direction, in a direction away from the light flux introduction unit.

In the image display device according to Item 6, by changing the ratio occupied by the reflective portions formed in the beam splitter depending on position, the transmittance (or reflectance) of the beam splitter can be changed, and the luminance of the virtual image can be appropriately changed. The change in the ratio occupied by the reflective portions may be stepwise as in the image display device according to Item 7, or may be continuous as in the image display device according to Item 8.

(Item 9) The image display device according to Item 9 is the image display device according to any one of Items 6 to 8, wherein the ratio of the reflective portions in the beam splitter is determined such that a ratio of the light flux exiting to the outside of the light guide becomes higher as a distance from the light flux introduction unit increases.

In the image display device according to Item 9, since it is configured such that the ratio of the light flux exiting to the outside of the light guide becomes higher as the distance from the light flux introduction unit increases, luminance unevenness of the virtual image can be suppressed, or the light use efficiency can be increased without sacrificing luminance unevenness. Note that when the beam splitter is arranged on the surface of the plate-like member and the light flux transmitted through the beam splitter is caused to exit the light guide, the ratio of the light transmissive portions should be increased as the distance from the light flux introduction unit increases. When the beam splitter is arranged on a predetermined surface of a plurality of prisms constituting the plate-like member and the light flux reflected by the beam splitter is caused to exit the light guide, the ratio of the light transmissive portions should be decreased as the distance from the light flux introduction unit increases.

(Item 10) The image display device according to Item 10 is the image display device according to any one of Items 1 to 9, further comprising: a combiner on which the light flux exiting from the light extraction region is incident.

In the image display device according to Item 10, by arranging the combiner in front of the user's eyes, the user can be made to simultaneously view the real image of the object or scenery located in front of the user's eyes and the enlarged virtual image of the image generated by the image generation unit. Furthermore, the user can view the real image with uniform luminance regardless of the transmittance or rate of change of the beam splitter. [Reference Signs List]

1, 100, 200... Head-up display 10... Image generation unit 11... Image formation unit 12... Collimating optical system 20, 120, 50... Light guide 21, 121, 51... Plate-like member 22, 122, 52, 521-524... Polka-dot beam splitter 221, 1221... Base material 222, 1222... Reflective portion 23, 123, 53... Light flux introduction unit 124... Light extraction auxiliary member 1241... Flat surface 1242... Sawtooth surface 12421... First surface 12422... Second surface 30... Combiner 40... User's eyes 70... Head-mounted display

## Claims

1. An image display device, comprising: an image generation unit that emits a light flux forming a predetermined image as a parallel light flux; and a light guide that propagates the parallel light flux internally, the light guide having a light flux introduction unit provided on one end side of the light guide to introduce the parallel light flux emitted from the image generation unit, a propagation unit that propagates the introduced parallel light flux while reflecting it internally, and a light extraction unit provided on the other end side of the light guide to extract a part of the light flux propagated through the propagation unit by a beam splitter, wherein the beam splitter is one in which reflective portions that reflect the parallel light flux are formed in a two-dimensional arrangement.

2. The image display device according to claim 1, wherein the light flux introduction unit introduces the parallel light flux into the light guide at an angle at which the parallel light flux does not undergo total reflection in the propagation unit, and a reflective portion is provided in a region on the surface of the light guide, on which the parallel light flux propagating through the propagation unit is incident.

3. The image display device according to claim 1, wherein the light flux introduction unit introduces the parallel light flux into the light guide at an angle at which the parallel light flux undergoes total reflection in the propagation unit, and the light guide further comprises: a light extraction auxiliary member arranged so as to be in contact with the beam splitter and having, in a region where the parallel light flux transmitted through the beam splitter exits, a light extraction surface on which the parallel light flux is incident at an angle at which it does not undergo total reflection.

4. The image display device according to claim 1, wherein a separation distance between the plurality of light transmissive portions is less than a size of a user's pupil.

5. The image display device according to claim 1, wherein the beam splitter is provided on the surface of the light guide.

6. The image display device according to claim 1, wherein a ratio of the reflective portions in the beam splitter varies depending on position.

7. The image display device according to claim 6, wherein the ratio of the reflective portions changes stepwise in a direction away from the light flux introduction unit.

8. The image display device according to claim 6, wherein the ratio of the reflective portions changes continuously in either an increasing or decreasing direction, in a direction away from the light flux introduction unit.

9. The image display device according to claim 1, wherein the ratio of the reflective portions in the beam splitter is determined such that a ratio of the light flux exiting to the outside of the light guide becomes higher as a distance from the light flux introduction unit increases.

10. The image display device according to claim 1, further comprising: a combiner on which the light flux exiting from the light extraction region is incident.

# FIG. 1

Light
extraction
unit
22

Light
propagation
unit
211

30

40

211

23

21

210

20

12   11

10

1

# FIG. 2

Light flux introduction unit side

Combiner side

22

222

221

222

221

# FIG. 3

Light flux introduction unit side

Combiner side

22

222

221

222

221

# FIG. 4

# FIG. 5

# FIG. 6

# FIG. 7

Light
extraction
unit

22

211

21

Light
propagation
unit

211

1313

23

20

12    11

10

40

70

# FIG. 8

# FIG. 9

Europäisches
Patentamt

European
Patent Office

Office européen
des brevets

# EUROPEAN SEARCH REPORT

**Application Number**

EP 25 22 3370

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 760 762 B1 (KELLY DANIEL [US] ET AL) 24 June 2014 (2014-06-24) * abstract; figures 2-7 * ----- | 1,2,4-8 | INV.<br>G02B27/01<br>G02B5/08<br>G02B27/00 |
| X | US 2017/031161 A1 (ROSSINI UMBERTO [FR]) 2 February 2017 (2017-02-02) * abstract; figures 2-6 * ----- | 1,3,9,10 | |
| A | US 2022/057643 A1 (EISENFELD TSION [IL] ET AL) 24 February 2022 (2022-02-24) * paragraph [0052] * ----- | 1 | |

**TECHNICAL FIELDS SEARCHED (IPC)**

G02B

The present search report has been drawn up for all claims

| Place of search | Date of completion of the search | Examiner |
|---|---|---|
| Munich | 4 May 2026 | Elflein, Wilhelm |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 3370

This annex lists the patent family members relating to the patent documents cited in  the above-mentioned European search report.
The members are as contained in the European Patent Office EDP file on
The European Patent Office is in no way liable for these particulars which are merely given for the purpose of information.

04-05-2026

| Patent document cited in search report | | Publication date | Patent family member(s) | | Publication date |
|---|---|---|---|---|---|
| US 8760762 | B1 | 24-06-2014 | NONE | | |
| US 2017031161 | A1 | 02-02-2017 | EP | 3074809 A1 | 05-10-2016 |
| | | | FR | 3014209 A1 | 05-06-2015 |
| | | | US | 2017031161 A1 | 02-02-2017 |
| | | | WO | 2015078788 A1 | 04-06-2015 |
| US 2022057643 | A1 | 24-02-2022 | AU | 2020349136 A1 | 07-04-2022 |
| | | | BR | 112022002335 A2 | 19-04-2022 |
| | | | CA | 3153661 A1 | 25-03-2021 |
| | | | CN | 114207354 A | 18-03-2022 |
| | | | CN | 118584657 A | 03-09-2024 |
| | | | EP | 4031808 A1 | 27-07-2022 |
| | | | IL | 290757 A | 01-04-2022 |
| | | | JP | 7638538 B2 | 04-03-2025 |
| | | | JP | 2022546979 A | 10-11-2022 |
| | | | JP | 2025067942 A | 24-04-2025 |
| | | | KR | 20220061962 A | 13-05-2022 |
| | | | KR | 20260023079 A | 20-02-2026 |
| | | | TW | 202126957 A | 16-07-2021 |
| | | | TW | 202530589 A | 01-08-2025 |
| | | | US | 2022057643 A1 | 24-02-2022 |
| | | | US | 2025013061 A1 | 09-01-2025 |
| | | | WO | 2021053665 A1 | 25-03-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010282231 A
- JP 2013178549 A
- JP 2013210633 A
- WO 2021157044 A

**Non-patent literature cited in the description**

- Realization of a large projection, compact automotive head-up display with light guide technology. Shimadzu Corporation, 21 April 2023
- Polka Dot Beamsplitters. Thorlabs, Inc., 15 January 2025
- Rectangular Step Variable Metallic ND Filters. Thorlabs, Inc., 15 January 2025
- Rectangular Continuously Variable Metallic ND Filters. Thorlabs, Inc., 15 January 2025
- Development of technology to print and form metal electrodes on plastic film at low temperature. National Institute of Advanced Industrial Science and Technology (AIST), 24 September 2008
- Sea-Light processing for patterning vapor-deposited films by water washing, also for low-resistance ITO/Ag grid composite electrodes. **FUJIMOTO, DAIKI**. Convertech. Oike & Co., Ltd., 15 January 2014, vol. 42, 110-111